# FASCICULE DE BREVET EUROPEEN

(11) **EP 2 428 008 B1**
(45) Date de publication et mention de la délivrance du brevet: **30.03.2016**
(21) Numéro de dépôt: 10723697.8
(22) Date de dépôt: 19.04.2010
(51) Int. Cl.: H04L 12/875, H04L 12/801, H04L 12/851, H04L 12/841, H04L 12/823, H04L 12/861

(54) **PROCEDE DE TRAITEMENT DE FLOTS DANS UN RESEAU DE COMMUNICATION**
VERFAHREN FÜR DIE VERARBEITUNG VON DATENSTRÖMEN IN EINEM KOMMUNIKATIONSNETZ.
METHOD FOR PROCESSING DATA STREAMS IN A COMMUNICATION NETWORK

(30) Priorité: 04.05.2009 FR 0952951
(43) Date de publication de la demande: 14.03.2012
(73) Titulaire: Orange, 75015 Paris (FR)
(72) Inventeur: MUSCARIELLO, Luca, F-75005 Paris (FR); BONALD, Thomas, F-78960 Voisins Le Bretonneux (FR)
(86) Numéro de dépôt international: PCT/FR2010/050744
(87) Numéro de publication internationale: WO 2010/128228

(56) Documents cités:
- EP-A- 1 531 588
- US-A1- 2005 099 979
- YONGHO SEOK ET AL: "Queue management algorithm for multi-rate wireless local area networks" PERSONAL, INDOOR AND MOBILE RADIO COMMUNICATIONS, 2003. PIMRC 2003. 14TH IEEE PROCEEDINGS ON SEPT. 7-10, 2003, IEEE, PISCATAWAY, NJ, USA, vol. 2, 7 septembre 2003 (2003-09-07), pages 2003-2008, XP010677911 ISBN: 978-0-7803-7822-3

## Description

L'invention se situe dans le domaine des communications à travers un réseau de communication sans fil, notamment dans un réseau pour lequel l'accès au canal radio est partagé dans le temps entre une pluralité de noeuds. Plus précisément l'invention concerne une technique de traitement de flots dans un tel réseau de communication.

De plus en plus de services sont déployés sur des accès à un réseau de communication par paquets, par exemple à Internet, qu'ils soient fixes ou mobiles. Ces services concernent par exemple les appels voix, des transferts de fichiers vidéos, des jeux, des services de type Web. Ils ont, par nature, des exigences de qualité de service différentes en termes de délai et de taux de perte de paquets.

L'article de Y. Seok, J.Park et Y. Choi intitulé « Queue Management Algorithm for Multi-rate Wireless Local Area Networks » (Actes du « IEEE International Symposium on Personal, Indoor and Mobile Radio Communication », pages 2003 à 2008, septembre 2003) décrit un procédé de traitement de paquets dans un réseau de communication, dans lequel des paquets de données sont reçus par un dispositif dudit réseau de communication et mémorisés dans une file d'attente en vue de leur transmission par ledit dispositif sur un canal radio à destination d'au moins un noeud, l'accès au canal radio étant partagé dans le temps entre une pluralité de noeuds. Selon ce procédé, on détermine pour chaque paquet mémorisé dans la file d'attente une durée nécessaire à la transmission de ce paquet, ladite durée étant fonction du débit de données sur le canal radio entre le dispositif et le noeud destinataire. Si la file d'attente est pleine, on supprime le paquet de la file d'attente ayant la plus grande durée de transmission et l'on émet le paquet de la file d'attente ayant la plus petite durée de transmission.

La demande de brevet européen publiée sous le numéro EP2031809 propose un procédé de traitements de flots permettant de mettre en oeuvre un traitement différencié des flots de données en un point d'un réseau de communication. Des paquets de données appartenant à différents flots sont reçus par un dispositif du réseau de communication et sont mémorisés dans une file d'attente en vue de leur transmission par ce dispositif. Pour transmettre un paquet de données, on sélectionne un flot auquel le moins d'espace mémoire dans la file d'attente est alloué et on transmet un paquet du flot sélectionné, extrait de la file d'attente, et lorsque l'espace mémoire disponible de la file d'attente ne permet pas de mémoriser un paquet reçu, on sélectionne un flot auquel le plus d'espace mémoire dans la file d'attente est alloué, un paquet de données du flot sélectionné étant alors supprimé de la file d'attente. Ce traitement différencié ne nécessite pas de marquage explicite des paquets appartenant aux flots. Il permet de fournir un service différencié, visant à transmettre de façon prioritaire certains types de flots, de façon implicite, c'est-à-dire sans détermination explicite des applications associées.

On se place par la suite dans le cas d'un dispositif dont l'une des interfaces est de type sans fil, c'est-à-dire par la voie radio, pour laquelle l'accès à la ressource radio est partagé dans le temps entre les différents utilisateurs. Différents équipements ou utilisateurs sont connectés au travers de cette interface sans fil au dispositif. Lorsque la liaison d'un des équipements avec le dispositif est soumise à de mauvaises conditions radio, un débit faible est choisi et par conséquent, une transmission d'un paquet va être plus longue. Etant donné que l'accès à la ressource radio est partagé en temps, ce délai retarde la transmission de tous les paquets en attente dans le dispositif. Ainsi dès qu'un utilisateur est soumis à de mauvaises conditions radio, les autres utilisateurs se trouvent également pénalisés.

En fonctionnement, le dispositif reçoit des paquets appartenant à différents flots destinés à différents utilisateurs sur une de ses interfaces et transmet ceux-ci vers les utilisateurs auxquels sont destinés ces flots par l'interface sans fil. Le procédé de traitement de flots tel que décrit précédemment ne permet pas d'obtenir de bonnes performances dans un tel cas. A titre d'exemple, pour deux utilisateurs A et B ayant chacun un flot de même type en cours, par exemple un transfert de fichiers vidéo en mode "streaming", les flots respectifs de ces deux utilisateurs A et B vont être différenciés par rapport aux éventuels autres flots non temps réel de ces utilisateurs par le procédé de traitement de flots et traités de façon prioritaire. Si l'utilisateur A rencontre de mauvaises conditions radio par rapport à celles de l'utilisateur B, le flot de l'utilisateur B va être pénalisé par le flot de l'utilisateur A pour les raisons détaillées ci-dessus. La différentiation implicite des flots telle que proposée dans le document EP2031809 ne permet donc pas d'obtenir de bonnes performances pour ordonnancer des paquets en vue de leur transmission sur une interface radio à accès partagé dans le temps.

Un des buts de l'invention est de remédier à des insuffisances/inconvénients de l'état de la technique et/ou d'y apporter des améliorations.

Selon un premier aspect, l'invention a pour objet un procédé de traitement de flots, des paquets de données appartenant à différents flots étant reçus par un dispositif d'un réseau de communication et mémorisés dans une file d'attente en vue de leur transmission par ledit dispositif sur un canal radio à destination d'au moins un noeud, l'accès au canal radio étant partagé dans le temps entre une pluralité de noeud, ledit procédé comprenant :
- au moins une étape de détermination d'une durée associée à un flot, correspondant à une durée virtuelle nécessaire à une transmission des paquets dudit flot mémorisés dans la file d'attente, et
- pour transmettre un paquet de données, une étape de sélection d'un flot parmi une pluralité de flots, dans laquelle on sélectionne un flot pour lequel la durée associée est la plus petite et une étape de transmission d'un paquet du flot sélectionné, extrait de la file d'attente.

Ainsi, grâce à l'invention, on peut bénéficier des avantages du procédé de traitement de flots, objet de la demande de brevet EP2031809, tout en prenant en compte la particularité d'un canal radio à accès partagé dans le temps. De tels canaux sont notamment prévus dans les normes IEEE 802.11, WIMAX, pour "Worldwide Interoperability for Microwave Access" ou UMTS HSDPA, pour "High Speed Downlink Packet Access".

Le procédé de traitement de flots est mis en oeuvre dans un équipement du réseau de communication, apte à acheminer des paquets de données. Il peut s'agir par exemple d'un point d'accès au réseau de communication, permettant à des équipements d'accéder au réseau de communication par un canal radio à accès partagé.

Grâce au critère retenu pour différencier les flots, le procédé permet ainsi de prendre en compte une durée virtuelle correspondant à celle qui serait nécessaire pour retransmettre l'ensemble des paquets d'un flot mémorisés dans la file d'attente en l'absence de tout autre flot. La prise en compte de cette durée associée à un flot permet ainsi de différencier les flots et il est alors possible d'appliquer aux paquets de ces flots un traitement différencié. Si on considère les flots d'un premier utilisateur, les flots de type temps réel de ce premier utilisateur, par nature plus sensibles aux délais et aux pertes de paquet, bénéficient d'un traitement prioritaire par rapport aux flots de type non temps réel de ce même premier utilisateur. On considère maintenant un deuxième utilisateur utilisant un débit équivalent à celui du premier. Lorsque des flots de ce deuxième utilisateur sont également traités par le dispositif, on obtient également une différentiation implicite des flots des premier et deuxième utilisateurs. On considère ensuite un troisième utilisateur présentant un débit faible, notamment en raison de mauvaises conditions radio. Comme pour les deux premiers utilisateurs, on obtient également une différentiation implicite au sein des flots de ce troisième utilisateur. De plus, grâce au procédé de traitement de flots, il est possible d'offrir un traitement différencié de l'ensemble des flots, indépendamment de l'utilisateur destinataire de ce flot, en prenant en compte les conditions radio respectives rencontrées par les utilisateurs.

De plus, comme pour le procédé de traitement de flots décrit dans la demande de brevet EP 2031809, on s'affranchit d'un marquage explicite des paquets, permettant de différencier des flots de données relatifs à un service en fonction d'une qualité de service requise. L'invention tire partie de la constatation suivante. Des flots relatifs à un service de type temps réel sont régulés naturellement par l'émetteur du flot, notamment du fait d'un débit limité par l'émetteur. Par opposition, des flots relatifs à un service non temps réel, par exemple un service de transfert de données, ne sont pas régulés à l'émission.

Il est à noter qu'un tel traitement différencié s'adapte à l'évolution des services et de la structure des flots. Ainsi un flot peut comprendre des parties de différentes natures, ces différentes parties correspondant respectivement à différents services. Il peut s'agir par exemple, sur un même flot, d'une conversation téléphonique, nécessitant un traitement temps réel, suivie d'un transfert de fichiers destinés à un traitement différé par le récepteur.

Le procédé de traitement de flots permet ainsi de prendre en compte à la fois la nature du flot et les conditions radio lors du traitement des flots de l'ensemble des utilisateurs se partageant l'accès à la ressource radio.

Selon des caractéristiques particulières, lorsque la file d'attente ne permet pas de mémoriser un paquet reçu, le procédé comprend en outre :
- une étape de sélection d'un flot, dans laquelle on sélectionne un flot pour lequel la durée associée est la plus grande, et
- une étape de suppression d'au moins un paquet de données du flot sélectionné de la file d'attente.

Lorsque la file d'attente est saturée et ne permet pas de mémoriser un paquet reçu, on détermine ainsi un flot pour lequel la durée virtuelle nécessaire à la transmission des paquets en attente est la plus grande comparativement aux autres flots qui ont des paquets en attente. Le traitement différencié permet de libérer de l'espace mémoire dans la file d'attente, en supprimant un paquet d'un flot pour lequel la transmission de l'ensemble des paquets mémorisés dans la file nécessiterait une occupation de la ressource radio la plus importante, afin de pouvoir disposer d'espace mémoire nécessaire à de nouveaux paquets reçus par le dispositif. Par exemple, les flots de transfert de données sont, de manière générale, plus tolérants aux délais et aux pertes de paquets, notamment en raison d'une protection mise en oeuvre dans des couches de niveau supérieur aux couches de niveau 2 et 3 du modèle de référence OSI.

Selon d'autres caractéristiques particulières, le procédé comprend en outre une étape d'obtention d'un indicateur représentatif de conditions radio d'une liaison entre le point d'accès et un noeud, la durée associée à un flot étant déterminée en fonction dudit indicateur de la liaison entre le point d'accès et le noeud auquel le flot est destiné.

Ainsi, si lorsque les conditions radio évoluent, notamment en raison d'améliorations ou de dégradation de l'interface radio, les durées associées aux flots sont réévaluées en fonction de ces nouvelles conditions radio. Le traitement différencié des flots n'est donc pas figé et s'adapte ainsi aux nouvelles conditions radio.

L'indicateur représentatif de conditions radio peut en particulier appartenir au groupe comprenant au moins un débit, un indicateur de qualité radio.

De plus, dans un mode de réalisation particulier, les étapes du procédé sont effectuées lors du traitement de paquets de données dans une couche de niveau 2 ou 3 du modèle de référence OSI.

Le traitement des flots peut être effectué dans différentes couches du modèle de référence OSI, et plus précisément les couches de niveau 2 et 3. Il s'agit de la couche MAC, pour "Medium Access Control", LLC, pour "Link Logical Control" ou IP, pour "Internet Protocol".

Selon un deuxième aspect, l'invention concerne également un dispositif de traitement de flots dans un réseau de communication, des paquets de données appartenant à différents flots étant reçus et mémorisés dans une file d'attente en vue de leur transmission par ledit dispositif sur un canal radio, l'accès au canal radio étant partagé dans le temps entre une pluralité de noeud, comprenant :
- des moyens de détermination d'une durée associée à un flot, correspondant à une durée virtuelle nécessaire à une transmission des paquets dudit flot mémorisés dans la file d'attente,
- des moyens de sélection d'un flot parmi une pluralité de flots en vue d'une transmission d'un paquet de données de ce flot, agencés pour sélectionner un flot pour lequel la durée associée est la plus petite, et
- des moyens de transmission d'un paquet du flot sélectionné sur le canal radio, extrait de la file d'attente.

Selon un troisième aspect, l'invention concerne en outre un point d'accès d'un réseau de communication, comprenant un dispositif de traitement de flots tel que décrit précédemment.

Selon un quatrième aspect, l'invention concerne un programme pour un dispositif de traitement de flots, comprenant des instructions de code de programme destinées à commander l'exécution des étapes du procédé précédemment décrit, lorsque ledit programme est exécuté par ledit dispositif et un support d'enregistrement lisible par un dispositif de traitement de flots sur lequel est enregistré un programme pour un dispositif de traitement de flots .

L'invention sera mieux comprise à l'aide de la description suivante d'un mode de réalisation particulier du procédé de l'invention, en référence aux dessins annexés sur lesquels :
- la figure 1 représente un système de communication ;
- la figure 2 représente les étapes du procédé selon un mode particulier de réalisation de l'invention ;
- la figure 3 représente un dispositif de traitement de flots selon un mode particulier de l'invention.

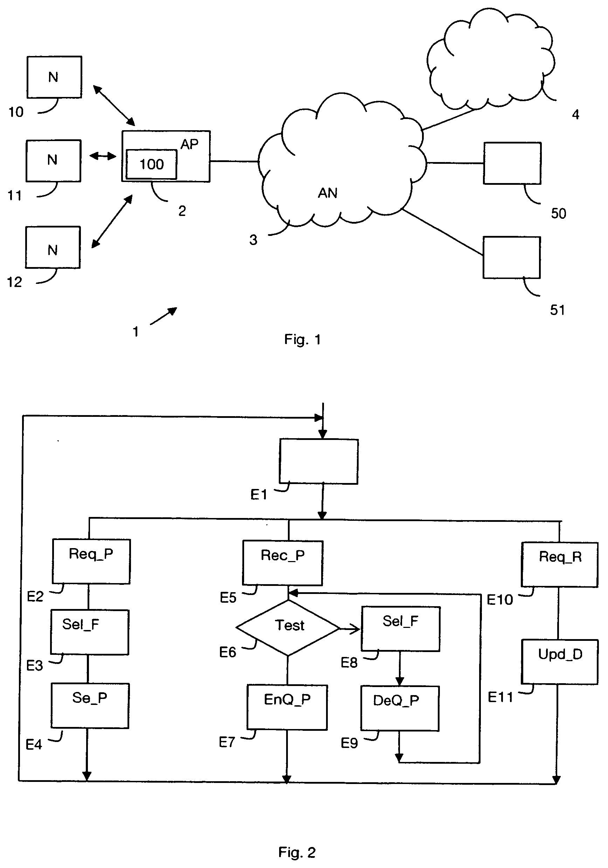

La figure 1 représente un système de communication 1 permettant à des utilisateurs 10, 11, 12 d'accéder à différents services comme la téléphonie, la télévision, la vidéo à la demande, l'Internet. Chaque utilisateur ou noeud 10, 11, 12 est relié au système par l'intermédiaire d'un point d'accès 2 du système de communication 1. Plus précisément, le point d'accès 2 est un point d'accès sans fil et les utilisateurs 10, 11, 12 communiquent avec le point d'accès 2 au moyen d'une ressource radio ou canal à accès partagé dans le temps. Il peut s'agir d'une ressource radio pour laquelle les accès se réalisent conformément à la norme IEEE 802.11. Le point d'accès 2 est lui-même connecté à un réseau d'accès 3. Ce dernier permet aux utilisateurs d'accéder à l'Internet 4 ou à différents services par l'intermédiaire de serveurs ou de passerelles de service 50, 51.

Lorsqu'un utilisateur 10, 11, 12 accède à un service particulier, des paquets de données relatifs à ce service particulier sont échangés entre le point d'accès 2 et un équipement du réseau Internet 4 ou une passerelle de service 50, 51.

Par la suite, on appelle "flot" l'ensemble des paquets de données d'un utilisateur associés à une même instance d'application, par exemple une conversation téléphonique, la transmission d'un flux vidéo, le téléchargement d'un fichier, etc. A titre d'exemple non limitatif, un flot peut être identifié dans un réseau de type IP, pour "Internet Protocol", par le quintuplé adresse source, adresse destination, numéro de port source, numéro de port destination et protocole (TCP pour "Transmission Control Protocol" ou UDP pour "User Datagram Protocol"). Dans le cas du protocole IPv6, le flot peut simplement être identifié par le champ "Flow ID" prévu à cet effet. On notera que l'identification du flot s'effectue simplement par lecture des champs des entêtes de protocole. Par ailleurs, un même flot peut comprendre différentes parties, ces différentes parties n'ayant pas les mêmes exigences de qualité de service. Il peut s'agir par exemple sur un même flot, d'une conversation téléphonique, nécessitant un traitement temps réel, suivie d'un transfert de fichiers destinés à un traitement différé par le récepteur. Il peut s'agir également d'une navigation sur un site Web comprenant une partie interactive de consultation de pages, par nature sensible au délai et taux de perte des paquets, suivie d'une partie de transfert de fichiers, par nature plus tolérante au délai et aux pertes de paquets.

On se place ici dans le cas particulier de flots appartenant à plusieurs utilisateurs utilisant la ressource radio par un accès partagé en temps.

Le point d'accès 2 reçoit les paquets de données, les mémorise dans une file d'attente et les transmet en fonction de critères d'acheminement.

On se place maintenant à titre d'exemple dans le cas d'un acheminement de paquets de données dans un réseau de type IP. Un équipement contribuant à l'acheminement des données met en oeuvre les différentes couches du modèle de référence OSI, plus précisément les couches de niveau 2 et 3. Il s'agit de la couche MAC, pour "Médium Access Control", LLC, pour "Link Logical Control" ou IP, pour "Internet Protocol". Ces différentes couches mettent généralement en oeuvre des files d'attente pour les échanges entre elles. On se place ici au niveau d'une couche particulière. Les paquets de données reçus par cette couche en provenance d'une couche supérieure sont mémorisés dans une file d'attente et sont transmis vers la couche inférieure en vue de leur traitement.

A titre d'exemple, on se place dans un mode particulier de réalisation où le procédé est mis en oeuvre au niveau de la couche LLC et notamment dans la gestion de la file d'attente des paquets de données de la couche supérieure IP vers la couche inférieure MAC.

La file d'attente comprend également pour chaque flot une durée associée, représentative d'une durée virtuelle nécessaire à la transmission des paquets mémorisés dans la file d'attente pour ce flot. Cette durée virtuelle dépend du débit sélectionné pour l'utilisateur à destination duquel est transmis le flot. Elle correspond à une transmission des paquets sans contrainte, c'est-à-dire en l'absence de tout autre flot.

De manière générale, le procédé de traitement de flots selon l'invention va permettre d'ordonnancer les flots émis par le point d'accès 2 à destination des différents utilisateurs se partageant la ressource radio. Les flots de type temps réel des utilisateurs présentant les meilleurs débits sont traités de façon prioritaire par rapport aux autres flots. Les flots de type non temps réel des utilisateurs présentant les plus mauvais débits sont traités de façon non prioritaire.

Nous allons maintenant décrire le procédé de traitement de flots dans ce mode particulier de réalisation en relation avec la figure 2.

Dans une première étape E1 d'attente, le procédé attend un évènement.

Lors d'une étape E5, on reçoit un paquet de données à transmettre en provenance de la couche IP. Le paquet de données est reçu en provenance du réseau d'accès 3 et est à destination d'un des utilisateurs ou noeuds 10, 11, 12.

Dans une étape E6 de test de l'espace mémoire disponible, on vérifie si le paquet peut être mémorisé dans la file d'attente, c'est-à-dire si l'espace mémoire disponible de la file d'attente dépasse la taille du paquet reçu.

Si l'espace mémoire libre de la file d'attente est suffisant par rapport à la taille du paquet reçu, dans une étape E7, on détermine le flot auquel appartient le paquet de données à partir de l'entête du paquet de données, par exemple par le quintuplé {adresse source, adresse destination, numéro de port source, numéro de port destination et protocole}, et on mémorise le paquet dans la file d'attente. On met également à jour la durée associée au flot pour prendre en compte la durée de transmission virtuelle de ce paquet. Il peut s'agir par exemple de déterminer de nouveau la durée virtuelle associée au flot en fonction d'un débit mémorisé pour l'utilisateur du flot. Le procédé repasse ensuite à l'étape E1 d'attente d'un évènement.

Si à l'issue de l'étape E6, on a déterminé que l'espace mémoire libre de la file d'attente n'est pas suffisant par rapport à la taille du paquet reçu, dans une première étape E8 de sélection d'un flot, on sélectionne un flot parmi les flots ayant des paquets mémorisés dans la file d'attente en fonction des durées respectives associées aux flots. Plus précisément, on sélectionne un flot parmi les différents flots pour lequel la durée associée est la plus grande, c'est-à-dire un flot pour lequel la durée virtuelle nécessaire à la transmission de l'ensemble des paquets mémorisés dans la file d'attente est la plus grande.

Dans une première étape de traitement E9, on extrait un paquet du flot sélectionné et on le supprime de la file d'attente. La durée associée au flot est mise à jour pour supprimer de celle-ci la durée d'une transmission du paquet supprimé.

Un flot pour lequel la durée associée est importante comparativement aux autres flots qui ont des paquets en attente est un flot non prioritaire. Le traitement différencié permet de libérer de l'espace mémoire, afin de pouvoir disposer d'espace mémoire nécessaire au nouveau paquet reçu par le dispositif à l'étape E5. Des flots de transfert de données sont notamment plus tolérants aux délais et aux pertes de paquets, notamment en raison d'une protection mise en oeuvre dans des couches de niveau supérieur aux couches de niveau 2 et 3 du modèle de référence OSI. Comme ils ne sont généralement pas régulés à l'émission, un nombre important de paquets peut se retrouver en attente dans la file. Ainsi, on supprime de la file d'attente au moins un paquet de données d'un flot non prioritaire en prenant en compte les conditions radio, sans avoir au préalable marqué les paquets en fonction d'une classe de service. Dans un mode de fonctionnement courant de gestion de files d'attente, dans un tel cas de saturation, on ne traite pas le paquet reçu. Ce paquet non traité est pourtant susceptible d'appartenir à un flot prioritaire.

Le procédé repasse ensuite à l'étape E6 de test de l'espace mémoire disponible. En effet, dans le cas de paquets de longueur variable, l'espace mémoire rendu disponible par la suppression d'un paquet ne permet pas obligatoirement d'accepter le paquet reçu.

Lors d'une étape E2, on détecte une requête en provenance de la couche MAC visant à obtenir un paquet de données à retransmettre.

Dans une deuxième étape E3 de sélection d'un flot, on sélectionne un flot parmi les flots ayant des paquets mémorisés dans la file d'attente en fonction des durées respectives associées aux flots. Plus précisément, on sélectionne un flot pour lequel la durée associée est la plus petite, c'est-à-dire un flot pour lequel le temps qui serait nécessaire à la transmission de tous les paquets est le plus petit.

Dans une deuxième étape E4 de traitement, on extrait un paquet appartenant au flot sélectionné de la file d'attente et on le transmet à la couche MAC en vue de sa transmission vers sa destination. La durée associée au flot pour lequel le paquet a été extrait est mise à jour, pour supprimer la durée virtuelle nécessaire à la transmission du paquet sélectionné.

Un flot pour lequel la durée associée est la plus petite comparativement aux autres flots qui ont des paquets en attente est un flot prioritaire. Le traitement différencié prenant en compte la durée virtuelle associée au flot permet de transmettre de façon prioritaire notamment des flots de type temps réel, par nature plus sensibles aux délais et aux pertes de paquets, par rapport à des flots non temps réel. Ils bénéficient ainsi d'un traitement prioritaire lors du traitement des paquets de la file d'attente. Ainsi, on transmet en priorité au moins un paquet de données d'un flot prioritaire en fonction des conditions radio, sans avoir au préalable marqué les paquets en fonction d'une classe de service. Dans un mode de fonctionnement courant de gestion de files d'attente, dans un tel cas, on transmet par exemple un paquet parmi les plus anciens mémorisés dans la file d'attente. Dans un tel cas, ce paquet transmis peut appartenir à un flot non prioritaire, alors que des paquets susceptibles d'appartenir à des flots prioritaires restent dans la file d'attente.

Le procédé repasse ensuite à l'étape E1 d'attente d'un évènement.

Lors d'une étape E10 d'obtention d'un indicateur représentatif de conditions radio, on obtient en provenance de la couche MAC un indicateur représentatif de conditions radio pour la liaison entre le point d'accès 2 et un des utilisateurs 10, 11, 12. Il s'agit par exemple du débit associé à cet utilisateur. Ce débit est représentatif d'un débit à un instant donné sélectionné pour les échanges s'effectuant entre cet utilisateur 10, 11, 12 et le point d'accès 2. L'utilisateur d'un flot est déterminé à partir de l'entête du flot, par exemple par l'adresse IP de destination comprise dans l'entête.

Dans une étape E11 de détermination des durées associées aux flots, le procédé détermine, lorsque le débit a changé, pour chaque flot de cet utilisateur et en fonction du débit obtenu, une durée associée au flot, correspondant à la durée virtuelle qui serait nécessaire au point d'accès 2 pour transmettre l'ensemble des paquets mémorisés dans la file d'attente pour ce flot. Plus précisément, le point d'accès 2 détermine pour chaque flot de cet utilisateur une durée égale à la division de la taille de l'espace mémoire utilisé par les paquets de ce flot dans la file d'attente par le débit obtenu pour l'utilisateur de ce flot. Ainsi, lors des étapes de sélection de flot en vue de la transmission E3 et en vue de la suppression E9, les conditions observées à l'interface radio sont prises en compte.

La description du procédé a été faite dans un mode particulier de réalisation au niveau de la couche LLC. Le procédé peut également être mis en oeuvre au niveau de la couche IP, au niveau de la couche MAC.

La description du procédé a été faite en prenant en tant qu'indicateur représentatif de conditions radio, le débit sélectionné à l'interface radio afin de déterminer la durée associée au flot. Cette durée peut être déterminée par tout autre moyen, notamment en prenant en compte des indicateurs de qualité radio. Il s'agit alors d'utiliser une fonction permettant d'obtenir à partir de l'espace mémoire alloué aux paquets du flot et d'un indicateur de qualité radio associé à l'utilisateur une durée associée au flot, représentative d'une durée virtuelle de transmission des paquets du flot mémorisés dans la file d'attente.

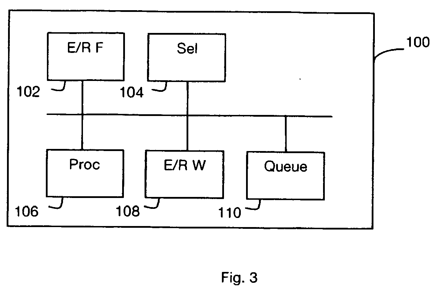

Nous allons maintenant décrire un dispositif de traitement de flots dans un mode particulier de réalisation de l'invention en référence à la figure 3.

Le dispositif 100 de traitement de flots dans un réseau de communication comprend:
- une zone mémoire 110, agencée pour mémoriser sous forme d'une file d'attente des paquets de données de flots et des durées associées aux différents flots, pour lesquels des paquets de données sont mémorisés dans la zone mémoire 110 ;
- un module 102 de réception de flots de paquets de données en provenance du réseau d'accès 3 et de mémorisation de ces derniers dans la file d'attente, en vue de leur transmission ultérieure ;
- un module 104 de sélection d'un flot, agencé pour sélectionner un flot parmi les flots ayant des paquets mémorisés dans la file d'attente en fonction d'un critère prédéterminé dépendant de la durée associée audit flot sélectionné dans la file d'attente ;
- un module 106 de commande ;
- un module 108 d'émission et de réception sur un canal radio à accès partagé dans le temps.

Le module 104 est agencé pour sélectionner un flot parmi les flots pour lesquels des paquets de données sont mémorisés dans la zone mémoire 110. Plus précisément, le module 104 est agencé pour sélectionner un flot pour lequel la durée associée est la plus petite ou pour sélectionner un flot pour lequel la durée associée est la plus grande.

Le module 106 de commande est agencé pour déterminer une durée associée à un flot, pour commander le module 104 de sélection d'un flot et pour traiter au moins un paquet de données du flot sélectionné, extrait de la file d'attente. Plus précisément, le module de commande 106 est agencé pour supprimer un paquet de données de la file d'attente en fonction du flot sélectionné par le module 104 de sélection et pour transmettre, le cas échéant, le paquet au module 108 d'émission sur le canal radio.

Le module 106 de commande est en outre agencé pour obtenir du module 108 un débit associé à un utilisateur, ce débit étant utilisé pour mettre à jour les durées associées aux flots de cet utilisateur.

Les modules 102, 104, 106 et 108 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif de traitement de flots. L'invention concerne donc aussi :
- un programme pour un dispositif de traitement de flots, comprenant des instructions de code de programme destinées à commander l'exécution des étapes du procédé précédemment décrit, lorsque ledit programme est exécuté par ledit dispositif ;
- un support d'enregistrement lisible par un dispositif de traitement de flots sur lequel est enregistré le programme pour un dispositif de traitement de flots.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Le dispositif 100 de traitement de flots peut être intégré dans un point d'accès 2 du réseau de communication.

L'invention est également applicable à différents types de ressources radio à accès partagé dans le temps, tels que WIMAX ou UMTS HSDPA.

## Revendications

1. Procédé de traitement d'ensembles de paquets de données d'un utilisateur associés à une même instance d'application, dits flots, dans un réseau de communication, des paquets de données appartenant à différents flots étant reçus par un dispositif dudit réseau de communication et mémorisés dans une file d'attente en vue de leur transmission par ledit dispositif sur un canal radio à destination d'au moins un noeud, l'accès au canal radio étant partagé dans le temps entre une pluralité de noeuds, ledit procédé comprenant :
- au moins une étape (E4, E7, E9, E11) de détermination d'une durée associée à un flot, correspondant à une durée virtuelle nécessaire à une transmission de l'ensemble des paquets dudit flot mémorisés dans la file d'attente en l'absence de tout autre flot, et
- pour transmettre un paquet de données, une étape (E3) de sélection d'un flot parmi une pluralité de flots, ayant des paquets mémorisés dans la file d'attente, consistant à sélectionner un flot pour lequel la durée associée est la plus petite et une étape (E4) de transmission d'un paquet du flot sélectionné, extrait de la file d'attente.

2. Procédé selon la revendication 1, comprenant, lorsque la file d'attente ne permet pas de mémoriser un paquet reçu,
- une étape (E8) de sélection d'un flot, dans laquelle on sélectionne un flot pour lequel la durée associée est la plus grande, et
- une étape (E9) de suppression d'au moins un paquet de données du flot sélectionné de la file d'attente.

3. Procédé selon la revendication 1, comprenant en outre une étape (E10) d'obtention d'un indicateur représentatif de conditions radio d'une liaison entre un point d'accès et un noeud, la durée associée à un flot étant déterminée en fonction dudit indicateur de la liaison entre le point d'accès et le noeud auquel le flot est destiné.

4. Procédé selon la revendication 3, dans lequel l'indicateur représentatif de conditions radio appartient au groupe comprenant au moins un débit, un indicateur de qualité radio.

5. Procédé selon la revendication 1, dans lequel les étapes du procédé sont effectuées lors du traitement de paquets de données dans une couche de niveau 2 ou 3 du modèle de référence OSI.

6. Dispositif (100) de traitement d'ensembles de paquets de données d'un utilisateur associés à une même instance d'application, dits flots, dans un réseau de communication, des paquets de données appartenant à différents flots étant reçus et mémorisés dans une file d'attente (110) en vue de leur transmission par ledit dispositif sur un canal radio, l'accès au canal radio étant partagé dans le temps entre une pluralité de noeuds, comprenant :
- des moyens (106) de détermination d'une durée associée à un flot, correspondant à une durée virtuelle nécessaire à une transmission de l'ensemble des paquets dudit flot mémorisés dans la file d'attente en l'absence de tout autre flot,
- des moyens (E3) de sélection d'un flot parmi une pluralité de flots, ayant des paquets mémorisés dans la file d'attente, en vue d'une transmission d'un paquet de données de ce flot, agencés pour sélectionner un flot pour lequel la durée associée est la plus petite, et
- des moyens (108) de transmission d'un paquet du flot sélectionné sur le canal radio, extrait de la file d'attente.

7. Point d'accès (2) d'un réseau de communication, comprenant un dispositif de traitement de flots selon la revendication 6.

8. Programme pour un dispositif de traitement de flots, comprenant des instructions de code de programme destinées à commander l'exécution des étapes du procédé selon l'une des revendications 1 à 5, lorsque ledit programme est exécuté par ledit dispositif.

9. Support d'enregistrement lisible par un dispositif de traitement de flots sur lequel est enregistré le programme selon la revendication 8.

## Patentansprüche

1. Verfahren zur Verarbeitung von Gruppen von Datenpaketen eines Nutzers, die einer gleichen Anwendungsinstanz zugeordnet sind, sogenannte Datenströme, in einem Kommunikationsnetz, wobei Datenpakete, die zu verschiedenen Datenströmen gehören, von einer Vorrichtung des Kommunikationsnetzes empfangen und in einer Warteschlange zu ihrem Übertragen durch die Vorrichtung auf einem Funkkanal an mindestens einen Knoten gespeichert werden, wobei der Zugang zu dem Funkkanal zeitlich zwischen mehreren Knoten geteilt wird, wobei das Verfahren Folgendes aufweist:
- mindestens einen Schritt (E4, E7, E9, E11) des Bestimmens einer Dauer, die einem Datenstrom zugeordnet ist, die einer virtuellen Dauer entspricht, die für ein Übertragen der Gruppe von Paketen des Datenstroms, die in der Warteschlange gespeichert sind, ohne irgendeinen anderen Datenstrom notwendig ist, und
- zum Übertragen eines Datenpakets einen Schritt (E3) des Auswählens eines Datenstroms aus mehreren Datenströmen, die Pakete aufweisen, die in der Warteschlange gespeichert sind, der darin besteht, einen Datenstrom auszuwählen, für den die zugeordnete Dauer die kürzeste ist, und einen Schritt (E4) des Übertragens eines Pakets des ausgewählten Datenstroms, das aus der Warteschlange extrahiert ist.

2. Verfahren nach Anspruch 1, umfassend, wenn die Warteschlange nicht ermöglicht, ein empfangenes Paket zu speichern,
- einen Schritt (E8) des Auswählens eines Datenstroms, wobei ein Datenstrom ausgewählt wird, für den die zugeordnete Dauer die längste ist, und
- einen Schritt (E9) des Streichens von mindestens einem Datenpaket des ausgewählten Datenstroms der Warteschlange.

3. Verfahren nach Anspruch 1, ferner umfassend einen Schritt (E10) des Erhaltens eines Indikators, der für Funkbedingungen einer Verbindung zwischen einem Zugangspunkt und einem Knoten repräsentativ ist, wobei die Dauer, die einem Datenstrom zugeordnet wird, in Abhängigkeit von dem Indikator der Verbindung zwischen dem Zugangspunkt und dem Knoten, für den der Datenstrom bestimmt ist, ermittelt wird.

4. Verfahren nach Anspruch 3, wobei der Indikator, der für Funkbedingungen repräsentativ ist, zu der Gruppe gehört, die mindestens eine Rate, einen Indikator der Funkqualität aufweist.

5. Verfahren nach Anspruch 1, wobei die Schritte des Verfahrens während der Verarbeitung von Datenpaketen in einer Schicht der Ebene 2 oder 3 des OSI-Referenzmodells durchgeführt werden.

6. Vorrichtung (100) zur Verarbeitung von Gruppen von Datenpaketen eines Nutzers, die einer gleichen Anwendungsinstanz zugeordnet sind, sogenannte Datenströme, in einem Kommunikationsnetz, wobei Datenpakete, die zu verschiedenen Datenströmen gehören, empfangen und in einer Warteschlange (110) zu ihrem Übertragen durch die Vorrichtung auf einem Funkkanal gespeichert werden, wobei der Zugang zu dem Funkkanal zeitlich zwischen mehreren Knoten geteilt wird, umfassend:
- Mittel (106) zum Bestimmen einer Dauer, die einem Datenstrom zugeordnet ist, die einer virtuellen Dauer entspricht, die für ein Übertragen der Gruppe von Paketen des Datenstroms, die in der Warteschlange gespeichert sind, ohne irgendeinen anderen Datenstrom notwendig ist, und
- Mittel (E3) zum Auswählen eines Datenstroms aus mehreren Datenströmen, die Pakete aufweisen, die in der Warteschlange gespeichert sind, zum Übertragen eines Datenpakets dieses Datenstroms, die angeordnet sind, um einen Datenstrom auszuwählen, für den die zugeordnete Dauer die kürzeste ist, und
- Mittel (108) zum Übertragen eines Pakets des ausgewählten Datenstroms auf dem Funkkanal, das aus der Warteschlange extrahiert ist.

7. Zugangspunkt (2) eines Kommunikationsnetzes, umfassend eine Vorrichtung zur Verarbeitung von Datenströmen nach Anspruch 6.

8. Programm für eine Vorrichtung zur Verarbeitung von Datenströmen, umfassend Programmcodebefehle, die dazu bestimmt sind, die Ausführung der Schritte des Verfahrens nach einem der Ansprüche 1 bis 5 zu steuern, wenn das Programm von der Vorrichtung ausgeführt wird.

9. Aufzeichnungsmedium, das von einer Vorrichtung zur Verarbeitung von Datenströmen lesbar ist, auf dem das Programm nach Anspruch 8 aufgezeichnet ist.

## Claims

1. Method for processing sets of user data packets that are associated with one and the same application instance, termed streams, in a communication network, data packets belonging to different streams being received by a device of said communication network and stored in a queue with a view to their transmission by said device over a radio channel to at least one node, access to the radio channel being shared in time between a plurality of nodes, said method comprising:
- at least one step (E4, E7, E9, Ell) of determining of a duration associated with a stream, corresponding to a virtual duration required for transmitting the set of packets of said stream that are stored in the queue in the absence of any other stream, and
- in order to transmit a data packet, a step (E3) of selecting a stream from a plurality of streams having packets stored in the queue, consisting of selecting a stream for which the associated duration is smallest, and a step (E4) of transmitting a packet of the selected stream, extracted from the queue.

2. Method according to Claim 1, comprising, when the queue does not allow a received packet to be stored,
- a step (E8) of selecting a stream, in which a stream is selected for which the associated duration is greatest, and
- a step (E9) of deleting at least one data packet from the selected stream of the queue.

3. Method according to Claim 1, further comprising a step (E10) of obtaining an indicator representative of radio conditions for a link between an access point and a node, the duration associated with a stream being determined as a function of said indicator of the link between the access point and the node for which the stream is intended.

4. Method according to Claim 3, in which the indicator representative of radio conditions belongs to the group comprising at least one throughput, an indicator of radio quality.

5. Method according to Claim 1, in which the steps of the method are carried out during the processing of data packets in a layer of level 2 or 3 of the OSI reference model.

6. Device (100) for processing sets of user data packets that are associated with one and the same application instance, termed streams, in a communication network, data packets belonging to different streams being received and stored in a queue (110) with a view to their transmission by said device over a radio channel, access to the radio channel being shared in time between a plurality of nodes, comprising:
- means (106) for determining a duration associated with a stream, corresponding to a virtual duration required for transmitting the set of packets of said stream that are stored in the queue in the absence of any other stream,
- means (E3) for selecting a stream from a plurality of streams having packets stored in the queue, with a view to transmitting a data packet of this stream, which are designed for selecting a stream for which the associated duration is smallest, and
- means (108) for transmitting a packet of the selected stream over the radio channel, extracted from the queue.

7. Access point (2) of a communication network, comprising a device for processing streams according to Claim 6.

8. Program for a stream processing device, comprising program code instructions intended to control the execution of the steps of the method according to one of Claims 1 to 5 when said program is executed by said device.

9. Recording medium readable by a stream processing device on which the program according to Claim 8 is recorded.
